# EUROPÄISCHE PATENTSCHRIFT

(11) **EP 1 666 776 B1**
(45) Veröffentlichungstag und Bekanntmachung des Hinweises auf die Patenterteilung: **26.03.2008**
(21) Anmeldenummer: 05019328.3
(22) Anmeldetag: 06.09.2005
(51) Int. Cl.: F16J 15/08

(54) **Zylinderkopfdichtung mit einem Abschirmabschnitt**
Cylinder head gasket with protective section
Joint de culasse avec section protectrice

(30) Priorität: 02.12.2004 DE 102004058235
(43) Veröffentlichungstag der Anmeldung: 07.06.2006
(73) Patentinhaber: Federal-Mogul Sealing Systems GmbH, 57562 Herdorf (DE)
(72) Erfinder: Retiere, Alain, 44300 Nantes (FR); Flemming, Ralf, 57520 Langenbach (DE); Schmitt, Klaus, 57520 Grünebach (DE)
(74) Vertreter: Becker Kurig Straus

(56) Entgegenhaltungen:
- DE-A1- 2 433 082
- DE-A1- 3 610 541
- DE-A1- 10 248 395
- DE-A1- 10 301 713
- DE-A1- 19 652 020

## Beschreibung

Die vorliegende Erfindung betrifft eine Zylinderkopfdichtung mit einer Aluminiumlage, die einen Abschirmabschnitt aufweist, die das Eindringen von Flüssigkeiten zwischen die Motorbauteile verhindert.

Bei der Konstruktion von Verbrennungskraftmaschinen werden vermehrt Materialien verwendet, die sich gegenüber lange bekannten Werkstoffen wie Gußeisen durch verbesserte Eigenschaften wie geringeres Gewicht auszeichnen. Vor allem Aluminium- und neuerdings verstärkt Magnesiumlegierungen werden dazu verwendet. Da verschiedene Bauteile eines Motors ganz unterschiedlichen Anforderungen genügen müssen, kommt es beim Aufbau solcher Maschinen zwangsläufig dazu, dass verschiedene Metalle bzw. Metalllegierungen mit unterschiedlichen Eigenschaften Verwendung finden. Obwohl dies eine große Flexibilität in Bezug auf die Anpassung der entsprechenden Materialien an die jeweiligen Erfordernisse verlangt, treten im Vergleich zu Motoren aus nur einem Werkstoff, wie beispielsweise Gußeisen, neue Probleme auf. Dabei ist unter anderem die Neigung zur Kontaktkorrosion zu nennen, die auftritt, wenn verschiedene Metalle bzw. Metalllegierungen in Kontakt kommen. An Verbindungsstellen solcher Materialpaarungen können Flüssigkeiten wie beispielsweise Salzwasser eintreten, die die Korrosion fördern.

Insbesondere Magnesiumlegierungen, die aufgrund ihrer vorteilhaften Materialeigenschaften in Zukunft vermehrt im Motorenbau anzutreffen sein dürften, besitzen gegenüber dem häufig bei Zylinderkopfdichtungen verwendeten Federstahl ein stark abweichendes Redoxpotenzial. Im Falle einer solchen Materialwahl, natürlich auch bei anderen Legierungen mit abweichendem Potenzial, sind Vorkehrungen notwendig, um die Kontaktkorrosion zu reduzieren, welche die Lebensdauer von Motorbauteilen verringern kann.

Es ist daher wünschenswert, die Kontaktstellen verschiedener Materialien in geeigneter Weise abzudichten, um Beschädigungen zu verhindern, die durch den Eintritt von Flüssigkeit hervorgerufen werden können.

Bei Verbrennungsmotoren ist die Zylinderkopfdichtung ein besonders gefährdeter Bereich. Hier werden verschiedene Materialien, wie beispielsweise ein Aluminium-Zylinderkopf mit dem Motorblock verbunden, der aus einer Magnesiumlegierung besteht.

Weiterhin sind Durchtrittsöffnungen z.B. für Kühlflüssigkeit vorhanden, und auch auf der Außenseite des Motors können Flüssigkeiten wie etwa Salzwasser in die Verbindungsstelle zwischen den einzelnen Teilen eintreten. Es ist daher insbesondere erforderlich, eine Zylinderkopfdichtung an den besonders exponierten Randkanten gegenüber eintretenden Flüssigkeiten abzudichten, sowie möglichst die Kontaktflächen von Zylinderkopf und Motorblock zu schützen, um der Kontaktkorrosion entgegenzuwirken.

Die DE 103 01 713 A1 offenbart eine Zylinderkopfdichtung für einen Verbrennungsmotor, die zwei übereinander liegende Dichtbleche und eine am Außenrand umlaufende Dichtung enthält. Die Dichtung steht im eingebauten Zustand vorzugsweise über die Außenfläche des Zylinderblocks vor, so dass von der Dichtung tropfendes Wasser nicht mit der Außenfläche des Zylinderblocks in Berührung kommt.

Der Randbereich des durch DE 103 01 713 A1 offenbarten Dichtsystems kann jedoch nicht vollständig verhindern, dass Flüssigkeiten in den direkten Kontaktbereich durchsickern.

Auch die in der DE 102 48 395 A1 vorgestellte Dichtung erreicht nicht, den direkten Kontaktbereich vollständig vor dem Eindringen von Flüssigkeiten zu schützen.

Aufgabe der vorliegenden Erfindung ist es, eine Zylinderkopfdichtung bereitzustellen, die gegen dem Eindringen von Flüssigkeit in den Brennraum und im Kontaktbereich zwischen Motorblock und Zylinderkopf entgegenwirkt.

Die Aufgabe wird durch eine Zylinderkopfdichtung gelöst, bei der der Randbereich und die metallische Funktionslage der Dichtung mit Hilfe einer erfindungsgemäßen umgebogenen Schutzlage geschützt werden.

Gemäß einem ersten Aspekt der vorliegenden Erfindung wird eine Zylinderkopfdichtung zur Abdichtung von Bauteilen einer Verbrennungskraftmaschine bereitgestellt. Die erfindungsgemäße Zylinderkopfdichtung umfasst mindestens eine Funktionslage mit einem umlaufenden Randbereich und mindestens eine Schutzlage, wobei die Schutzlage einen über den Randbereich der Funktionslage vorspringenden Abschirmabschnitt aufweist. Der Randbereich der Funktionslage wird im Wesentlichen von dem Abschirmabschnitt umschlossen und ist dazu bestimmt, im eingebauten Zustand den Randbereich übergreifend an der Außenfläche eines Bauteils anzuliegen.

Es ist bevorzugt, dass die Funktionslage eine metallische Funktionslage ist und die Schutzlage aus Aluminium gefertigt ist. Durch den Einsatz von Stahllagen als metallische Funktionslage wird eine vorteilhafte Abdichtung erreicht. Die Aluminiumlage ist unempfindlich gegenüber Flüssigkeiten und kann die Funktionslage und den Motorblock im Kontaktbereich vor Korrosion schützen.

Es ist bevorzugt, dass die Schutzlage im Kontaktbereich weiter eine Schutzsicke aufweist, wobei der Scheitelbereich der Schutzsicke an der Außenfläche des Bauteils im Kontaktbereich anliegt. Die Schutzsicke ermöglicht ein verbessertes Abdichtverhalten und kann flexibler auf mögliche Vibrationen des Motors reagieren.

Es ist bevorzugt, dass die Schutzsicke mindestens eine Beschichtung im Kontaktbereich, vorzugsweise im Scheitelbereich der Schutzsicke, aufweist, wobei die Beschichtung eine verbesserte Abdichtung im Kontaktbereich bereitstellt. Die Beschichtung beugt effektiv dem Eintreten von Wasser bzw. Flüssigkeit in den Brennraum des Motors vor.

Es ist bevorzugt, dass der Abschirmabschnitt den Randbereich mit einem Winkel im Bereich von 85° bis 90°, vorzugsweise etwa 90° umschließt, so dass der Abschirmabschnitt im Wesentlichen parallel zu der Außenfläche des Bauteils im Kontaktbereich verläuft. Der so geformte Abschirmabschnitt lässt sich einfach an verschiedenen Außenflächen eines Motorblocks oder Bauteils eines Motors anpassen.

Es ist bevorzugt, dass die Schutzlage im Kontaktbereich mindestens eine Beschichtung zur verbesserten Abdichtung aufweist. Dies verbessert das Abdichtverhalten.

Es ist bevorzugt, dass die Funktionslage mindestens eine weitere Funktionslage aufweist. Dadurch werden die abzudichtenden Bauteile verlässlicher miteinander verbunden und im Betrieb des Motors entstandene Vibrationen können besser aufgefangen werden.

Es ist bevorzugt, dass der Kontaktbereich eine Vielzahl von Schutzsicken aufweist. Durch den Einsatz mehrerer Schutzsicken wird das Abdichtverhalten der Dichtung weiter verbessert.

Es ist bevorzugt, dass die Funktionslage mindestens eine Dichtsicke im Kontaktbereich mit der Aluminiumlage aufweist. So wird sowohl dem Austritt von Fluiden aus dem Brennraum vorgebeugt als auch dem Eintritt von Flüssigkeiten in den Brennraum.

Es ist bevorzugt, dass Abschirmabschnitt angepasst ist, den Kontaktbereich auf die Außenfläche im montiertem Zustand anzupressen. Somit wird ein permanenter Kontakt mit der Außenfläche des Motorblocks gesichert.

Es ist bevorzugt, dass der vollflächige Kontaktbereich zwischen der Schutzlage und der Funktionslage mit einer Elastomerlage erweitert wird. Dadurch können Vibrationen besser aufgenommen und das Abdichtverhalten verbessert werden.

Es ist bevorzugt, dass die Beschichtung mit Hilfe eines Siebdruckverfahrens aufgebracht wird. Dieses Verfahren eignet sich besonders zum Aufbringen von Beschichtungen.

Weitere Vorteile und Merkmale der vorliegenden Erfindung werden aus der folgenden Beschreibung von Ausführungsformen der Erfindung ersichtlich, in der auf die angefügten Zeichnungen Bezug genommen wird, in der:
Fig. 1 eine bevorzugte erfindungsgemäße Ausführungsform einer Zylinderkopfdichtung im Querschnitt darstellt;
Fig. 2 eine andere bevorzugte erfindungsgemäße Ausführungsform der vorliegenden Erfindung im Querschnitt darstellt;
Fig. 3 eine weitere bevorzugte erfindungsgemäße Ausführungsform der Zylinderkopfdichtung im Querschnitt zeigt.

In den Figuren entspricht jeweils die rechte Seite der Figur der Außenseite, d.h. der von den Brennräumen abgewandten Seite der Dichtung, während die linke Seite dem nach innen gerichteten Teil entspricht, wo sich Verbrennungsräume oder dergleichen befinden. Während die Erfindung in den hier dargestellten Beispielen im Bezug auf den äußeren Randbereich der Funktionslage beschrieben wird, kann natürlich ebenso eine innen liegende Randkante etwa eines Kühlmitteldurchflusses auf die beschriebene Art geschützt werden.

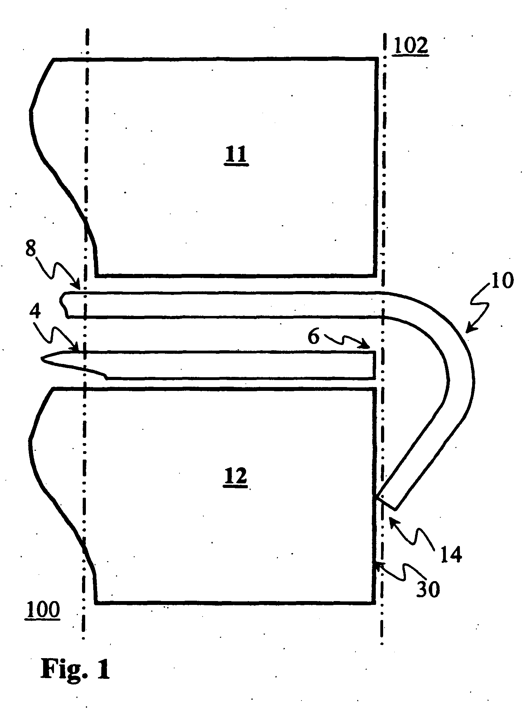

Die in Fig. 1 gezeigte erfindungsgemäße Zylinderkopfdichtung weist eine metallische Funktionslage 4 und eine Schutzlage 8 auf. Sie dient in ihrem eingebauten Zustand zur Abdichtung von zwei einander gegenüberliegenden Bauteilen 11 und 12 eines Motors. Das Bauteil 11 kann dem Al-Zylinderkopf entsprechen und Bauteil 12 kann den Mg-Motorblock darstellen. Der Bereich 100 entspricht dem Verbrennungsraum zugewandten Bereich und der Bereich 102 stellt den relativ zum Verbrennungsraum liegenden Außenbereich dar. Der Bereich 100 auf der Seite des Verbrennungsraums des Motors wurde nur schematisch dargestellt, da die interessierende Seite der Zylinderkopfdichtung am Grenzbereich mit dem Außenbereich liegt.

Die Schutzlage 8 weist Aluminium auf und die Funktionslage 4 kann eine Stahllage sein. Im besonders gefährdeten Randbereich 6 des Motorblocks 12 und der Funktionslage kann leicht Wasser bzw. andere Flüssigkeit eindringen, was zu einer Korrosion der Magnesiumlegierung im Kontaktbereich und der metallischen Funktionslage 4 führt. Es ist daher vorteilhaft, die Schnittkante bzw. den Schnittbereich der Stahllage und des Motorblocks im Randbereich 6 zu schützen. Dies kann durch Verwendung von Aluminiumlagen erreicht werden, da Aluminium automatisch eine Schutzschicht bildet, falls es in Kontakt mit Wasser kommt.

Zum Schutz des besonders gefährdeten Randbereichs 6 wird die Schutzlage 8 als Teil der Zylinderkopfdichtung eingesetzt, die sich über den Randbereich 6 erstreckt und diesen umschließt. Um eine vorteilhafte Isolation des Randbereichs 6 zum Außenbereich 4 02 hin zu erreichen, wird die Schutzlage in einem Abschirmabschnitt 10 umgebogen und mit dem Motorblock 12 in dauerhaften Kontakt gebracht, dh im Kontaktbereich 14. So kann Wasser von Außenbereich 102 nicht mehr auf die Stahllage 4 oder auf den Dichtbereich zwischen Magnesiummotorblock und Stahllage 4 eintreten, was zur Korrosion führen könnte.

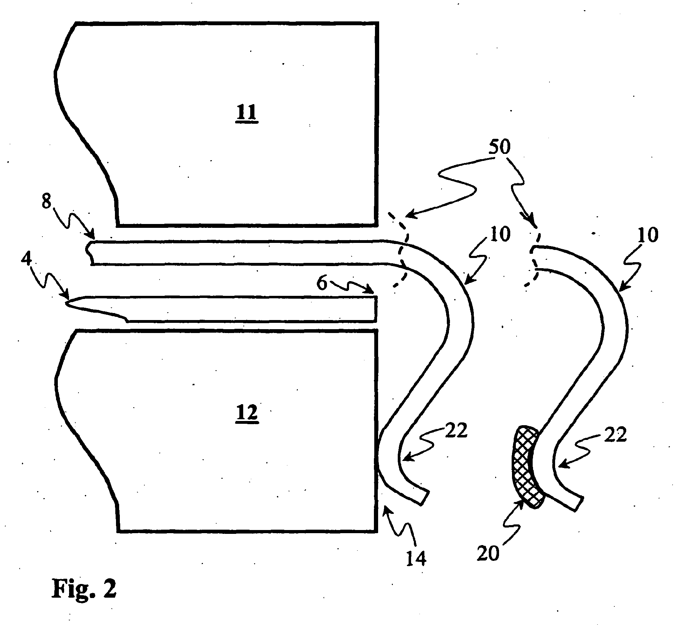

Fig. 2 stellt weitere erfindungsgemäße Ausführungsformen einer eingebauten Zylinderkopfdichtung dar. Die Beschreibung des Bereichs innerhalb der Dichtflächen des Zylinderkopfes 11 und des Motorblocks 12 sowie die Anordnung der Schutzlage 8 und der Funktionslage 4 in diesem Bereich sind analog zu Fig. 1.

Der Abschirmabschnitt 10 der Funktionslage 8 wurde erfindungsgemäß im Kontaktbereich 14 anders gestaltet. Die Lage 8 weist im Kontaktbereich 14 zwischen Motorblock 12 und Schutzlage 8 eine Schutzsicke 22 auf, die besser die Außenfläche des Motorblocks 12 kontaktiert und vor dem Eindringen von Flüssigkeiten schützt. Die Schutzsicke 22 ist in Richtung des Außenbereichs 102 geöffnet und kontaktiert dauerhaft in ihrem Scheitelpunkt die Außenfläche 30 des Motorblocks 12.

Entlang der virtuellen Schnittlinie 50 kann eine weitere Ausführungsform der Schutzlage 8 eingesetzt werden. Diese ist am rechten Rand der Fig. 1 schematisch dargestellt, wobei der Kontaktbereich 14 bzw. der Scheitelpunkt der Schutzsicke 22 mit einer Beschichtung 20 versehen sind. Die Beschichtung 20 sichert den festen Kontakt zwischen Schutzlage 8 und Motorblock 12 im Kontaktbereich 14. Dadurch kann einem Eindringen von Flüssigkeit an die Stahllage 6 und dem Kontaktbereich zwischen Stahllage und Magnesiummotorblock vorgebeugt werden.

Innerhalb des Dichtbereichs zwischen dem Zylinderkopf 11 und dem Motorblock stehen die Schutzlage 8 und die Funktionslage 4 flächig miteinander in Kontakt, was auch dem Austreten von Gasen oder ähnlichem aus dem Brennraum vorbeugt.

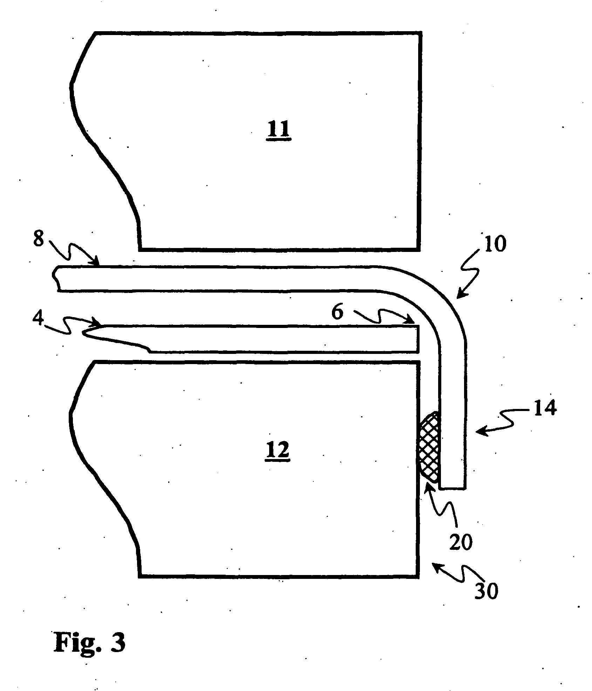

Fig. 3 zeigt eine weitere Ausführungsform der erfindungsgemäßen Zylinderkopfdichtung und besonders eine weitere vorteilhafte Ausgestaltung der Schutzlage 8 im Kontaktbereich mit dem Motorblock 12.

Der Abschirmabschnitt 10 der Schutzlage erstreckt sich um den Randbereich 6 mit einem etwa 90° Winkel und läuft somit im Wesentlichen parallel im Kontaktbereich aus. Um einen festen und dauerhaften Kontakt zwischen Schutzlage 8 und Motorblock im Kontaktbereich zu erreichen, wird eine Beschichtung 20 angebracht. Somit kann erneut dem Eindringen von Flüssigkeiten in den Randbereich 6 vorgebeugt werden.

## Patentansprüche

1. Zylinderkopfdichtung zur Abdichtung von Bauteilen (11, 12) einer Verbrennungskraftmaschine, umfassend mindestens eine Funktionslage (4) mit einem umlaufenden Randbereich (6) und mindestens eine Schutzlage (8), wobei die Schutzlage (8) einen über den Randbereich (6) der Funktionslage (4) vorspringenden Abschirmabschnitt (10) aufweist, der den Randbereich (6) im Wesentlichen umschließt, wobei der Abschirmabschnitt (10) dazu bestimmt ist, im eingebauten Zustand der Zylinderkopfdichtung den Randbereich (6) übergreifend an einer Außenfläche (30) des Bauteils (12) anzuliegen.

2. Zylinderkopfdichtung nach Anspruch 1, wobei die Funktionslage (4) eine metallische Funktionslage ist und die Schutzlage (8) aus Aluminium gerfertigt ist.

3. Zylinderkopfdichtung nach Anspruch 1 oder 2, wobei die Schutzlage (8) aus einem nicht metallischen Material gefertigt ist.

4. Zylinderkopfdichtung nach Anspruch 1, wobei die Schutzlage (8) in einem durch die Kontaktierung der Außenfläche definierten Kontaktbereich (14) weiter eine Schutzsicke (22) aufweist, wobei ein Scheitelbereich der Schutzsicke (22) an der Außenfläche (30) des Bauteils (12) im Kontaktbereich (14) anliegt.

5. Zylinderkopfdichtung nach Anspruch 4, wobei die Schutzsicke (22) mindestens eine Beschichtung (20) im Kontaktbereich (14), vorzugsweise im Scheitelbereich der Schutzsicke (22), aufweist, wobei die Beschichtung (20) eine verbesserte Abdichtung im Kontaktbereich (14) bereitstellt.

6. Zylinderkopfdichtung nach Anspruch 1, wobei der Abschirmabschnitt (10) den Randbereich (6) mit einem Winkel im Bereich von 85° bis 90°, vorzugsweise im Bereich von etwa 90° umschließt, so dass Abschirmabschnitt (10) und Außenfläche (30) des Bauteils (12)im Wesentlichen parallel im Kontaktbereich (14) verlaufen.

7. Zylinderkopfdichtung nach Anspruch 6, wobei die Schutzlage im Kontaktbereich (14) mindestens eine Beschichtung (20) zur verbesserten Abdichtung aufweist.

8. Zylinderkopfdichtung nach irgendeinem der vorhergehenden Ansprüche, wobei die Funktionslage (4) mindestens eine weitere Funktionslage aufweist.

9. Zylinderkopfdichtung nach irgendeinem der vorhergehenden Ansprüche, wobei der Kontaktbereich (14) eine Vielzahl von Schutzsicken (22) aufweist.

10. Zylinderkopfdichtung nach irgendeinem der vorhergehenden Ansprüche, wobei die Funktionslage (4) mindestens eine Dichtsicke im Kontaktbereich mit der Aluminiumlage (8) aufweist.

11. Zylinderkopfdichtung nach irgendeinem der vorhergehenden Ansprüche, wobei der Abschirmabschnitt (10) angepasst ist, den Kontaktbereich auf die Außenfläche (30) im montierten Zustand anzupressen.

12. Zylinderkopfdichtung nach irgendeinem der vorhergehenden Ansprüche, wobei der vollflächige Kontaktbereich zwischen der Schutzlage (8) und der Funktionslage (4) mit einer Elastomerlage erweitert wird.

13. Zylinderkopfdichtung nach irgendeinem der vorhergehenden Ansprüche, wobei die Beschichtung (20) mit Hilfe eines Siebdruckverfahrens aufgebracht wird.

## Claims

1. Cylinder head gasket for the sealing of components (11, 12) of an internal combustion engine, comprising at least one functional layer (4) with a continuous edge area (6) and at least one protective layer (8), wherein the protective layer (8) has a shielding section (10) extending over the edge area (6) of the functional layer (4) and substantially encompassing the edge area (6), wherein the shielding section (10) is intended to fit up against an outer surface (30) of the component (12), overlapping the edge area (6), in the installed state of the cylinder head gasket.

2. Cylinder head gasket according to claim 1, wherein the functional layer (4) is a metal functional layer and the protective layer (8) is made of aluminium.

3. Cylinder head gasket according to claim 1 or 2, wherein the protective layer (8) is made of a non-metallic material.

4. Cylinder head gasket according to claim 1, wherein the protective layer (8) also has a protective bead (22) in a contact zone (14) defined by the contacting of the outer surface, wherein an apex area of the protective bead (22) fits up against the outer surface (30) of the component (12) in the contact zone (14).

5. Cylinder head gasket according to claim 4, wherein the protective bead (22) has at least one coating (20) in the contact zone (14), preferably in the apex area of the protective bead (22), wherein the coating (20) provides improved sealing in the contact zone (14).

6. Cylinder head gasket according to claim 1, wherein the shielding section (10) encompasses the edge area (6) at an angle in the range of 85° to 90°, preferably in the range of around 90°, so that the shielding section (10) and outer surface (30) of the component (12) run substantially parallel in the contact zone (14).

7. Cylinder head gasket according to claim 6 wherein, for improved sealing, the protective layer has one or more coatings (20) in the contact zone (14).

8. Cylinder head gasket according to any of the preceding claims, wherein the functional layer (4) has at least one additional functional layer.

9. Cylinder head gasket according to any of the preceding claims, wherein the contact zone (22) has a multiplicity of protective beads (14).

10. Cylinder head gasket according to any of the preceding claims, wherein the functional layer (4) has one or more sealing beads in the contact zone with the aluminium layer (8).

11. Cylinder head gasket according to any of the preceding claims, wherein the shielding section (10) is adapted so as to press the contact zone against the outer surface (30) in the installed state.

12. Cylinder head gasket according to any of the preceding claims, wherein the full-surface contact zone between the protective layer (8) and the functional layer (4) is expanded by an elastomer layer.

13. Cylinder head gasket according to any of the preceding claims, wherein the coating (20) is applied with the aid of a screen printing process.

## Revendications

1. Joint de culasse servant à étancher des éléments (11, 12) d'un moteur à combustion interne, comprenant au moins une couche fonctionnelle (4) avec une zone marginale (6) périphérique et au moins une couche de protection (8), la couche de protection (8) présentant une section protectrice (10) dépassant de la zone marginale (6) de la couche fonctionnelle (4), qui entoure essentiellement la zone marginale (6), la section protectrice (10) étant destinée à s'appuyer contre une surface extérieure (30) de l'élément (12) en chevauchant la zone marginale (6) lorsque le joint de culasse est monté.

2. Joint de culasse selon la revendication 1, dans lequel la couche fonctionnelle (4) est une couche fonctionnelle métallique et la couche de protection (8) est fabriquée en aluminium.

3. Joint de culasse selon la revendication 1 ou 2, dans lequel la couche de protection (8) est fabriquée en un matériau non métallique.

4. Joint de culasse selon la revendication 1, dans lequel la couche de protection (8) présente en outre une moulure de protection (22) dans une zone de contact (14) définie par le contact de la surface extérieure, une zone sommitale de la moulure de protection (22) s'appuyant contre la surface extérieure (30) de l'élément (12) dans la zone de contact (14).

5. Joint de culasse selon la revendication 4, dans lequel la moulure de protection (22) présente au moins un revêtement (20) dans la zone de contact (14), de préférence dans la zone sommitale de la moulure de protection (22), le revêtement (20) fournissant une meilleure étanchéification dans la zone de contact (14).

6. Joint de culasse selon la revendication 1, dans lequel la section protectrice (10) entoure la zone marginale (6) avec un angle compris entre 85° et 90°, de préférence d'environ 90°, de sorte que la section protectrice (10) et la surface extérieure (30) de l'élément (12) s'étendent de manière essentiellement parallèle dans la zone de contact (14).

7. Joint de culasse selon la revendication 6, dans lequel la couche de protection présente dans la zone de contact (14) au moins un revêtement (20) améliorant l'étanchéification.

8. Joint de culasse selon l'une quelconque des revendications précédentes, dans lequel la couche fonctionnelle (4) présente au moins une autre couche fonctionnelle.

9. Joint de culasse selon l'une quelconque des revendications précédentes, dans lequel la zone de contact (14) présente une pluralité de moulures de protection (22).

10. Joint de culasse selon l'une quelconque des revendications précédentes, dans lequel la couche fonctionnelle (4) présente au moins une moulure étanche dans la zone de contact avec la couche d'aluminium (8).

11. Joint de culasse selon l'une quelconque des revendications précédentes, dans lequel la section protectrice (10) est adaptée pour serrer la zone de contact contre la surface extérieure (30) à l'état monté.

12. Joint de culasse selon l'une quelconque des revendications précédentes, dans lequel toute la surface de la zone de contact est élargie entre la couche de protection (8) et la couche fonctionnelle, (4) avec une couche élastomère.

13. Joint de culasse selon l'une quelconque des revendications précédentes, dans lequel le revêtement (20) est appliqué à l'aide d'un procédé de sérigraphie.
